# EUROPEAN PATENT APPLICATION

(11) **EP 1 827 043 A1**
(43) Date of publication of application: **29.08.2007**
(21) Application number: 05805958.5
(22) Date of filing: 09.11.2005
(51) Int. Cl.: H04Q 7/38, H04L 1/16, H04L 12/56, H04L 29/08

(54) **MOBILE COMMUNICATION SYSTEM, MOBILE STATION, WIRELESS BASE STATION, AND WIRELESS LINE CONTROL STATION**

(30) Priority: 09.11.2004 JP 2004325179; 05.01.2005 JP 2005001020
(71) Applicant: NTT DoCoMo Inc., Chiyoda-ku Tokyo 100-6150 (JP)
(72) Inventor: USUDA, Masafumi, NTT DoCoMo, Inc., Int.Property Dpt., Chiyoda-ku, Tokyo 100-6150 (JP); UMESH, Anil, NTT DoCoMo, Inc., Int.Property Dpt., Chiyoda-ku, Tokyo 100-6150 (JP); NAKAMURA, Takehiro, NTT DoCoMo, Inc., Int.Property Dpt., Chiyoda-ku, Tokyo 100-6150 (JP)
(74) Representative: HOFFMANN EITLE
(86) International application number: PCT/JP2005/020556
(87) International publication number: WO 2006/051827

(57) **Abstract**

In a mobile communication system, a data transmitting-side apparatus is configured to retransmit a transmission data block by using a data channel and a control channel according to a transmission acknowledgment signal transmitted from a data receiving-side apparatus. The data transmitting-side apparatus includes: a maximum number-of-retransmissions manager unit configured to manage a transmission power ratio between the data channel and the control channel or the transmission data block size to be associated with the maximum number of retransmissions of the transmission data block; and a retransmitter unit configured to retransmit the transmission data block, until the number of retransmissions of the transmission data block reaches the maximum number of retransmissions associated with the transmission power ratio of the transmission data block or the transmission data block size.

## Description

### [Technical Field]

The present invention relates to a mobile communication system in which a data transmitting-side apparatus is configured to retransmit a transmission data block by using a data channel and a control channel in accordance with a transmission acknowledgement signal transmitted from a data receiving-side apparatus, and a mobile station, a radio base station and mobile network control station that are used in such mobile communication system.

### [Background Art]

In a conventional mobile communication system, there is a problem of an increase of reception errors that results from large deterioration in the quality of uplink signals received by a radio base station and the quality of downlink signals received by a mobile station, because a received signal level in a data receiving-side apparatus instantaneously varies due to multi-path fading and the like.

As a technique for overcoming the aforementioned problem, there is known a hybrid ARQ (Auto Repeat reQuest and hereinafter referred to as HARQ).

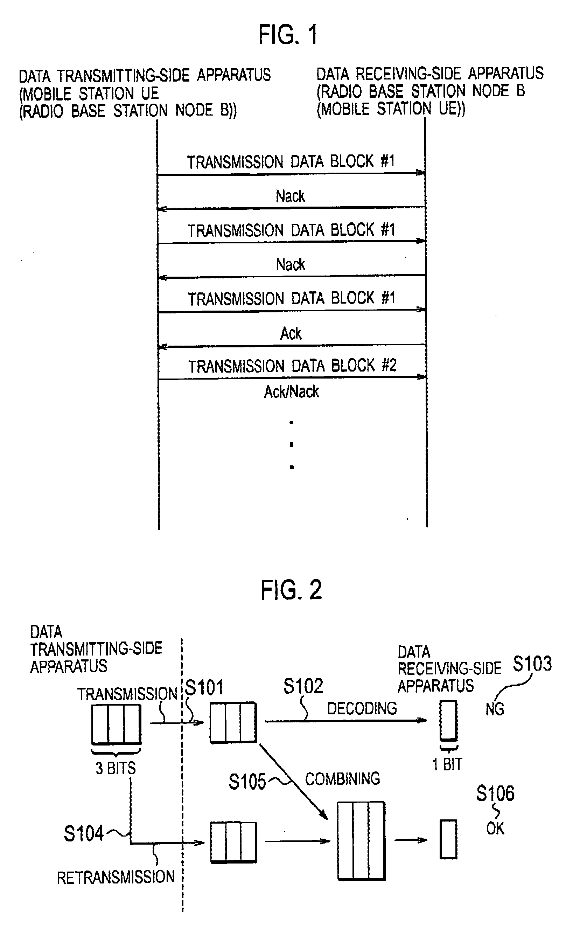

As illustrated in Fig. 1, in the HARQ, a data receiving-side apparatus (a radio base station Node B or a mobile station UE) transmits a transmission acknowledgement signal (Ack or Nack) to a data transmitting-side apparatus (a mobile station UE or a radio base station Node B) in response to a received transmission data block.

In general, only when receiving a transmission acknowledgement signal (Ack) indicating that a transmission data block (for example, a transmission data block #1) has been correctly received, the data transmitting-side apparatus is configured to transmit a next transmission data block (for example, a transmission data block #2).

On the other hand, when receiving a transmission acknowledgement signal (Nack) indicating that a transmission data block has not been correctly received, the data transmitting-side apparatus is configured to transmit the transmission data block again.

Furthermore, in the HARQ, soft combining can be performed as shown in Fig. 2 . Referring to Fig. 2, an operation principle of the soft combining is briefly described.

In step S101, the data transmitting-side apparatus transmits 3-bit transmission data block. In step 5102, the data receiving-side apparatus performs a decoding processing on a received transmission data block. At this time, it is assumed that the data receiving-side apparatus has detected a receiving error (refer to step S103). Here, the data receiving-side apparatus stores 3 bits forming the transmission data block, in which the receiving error has been detected, in a retransmission control memory as a soft decision bit.

In step S104, the data transmitting-side apparatus retransmits the 3-bit transmission data block. In step S105, the data receiving-side apparatus adds the soft decision bits stored in the transmission control memory and the 3-bit the received transmission data block, so that a ratio of signal power to noise power is increased. Consequently, the data receiving-side apparatus succeeds in receiving the transmission data block without detecting a receiving error (refer to step S106).

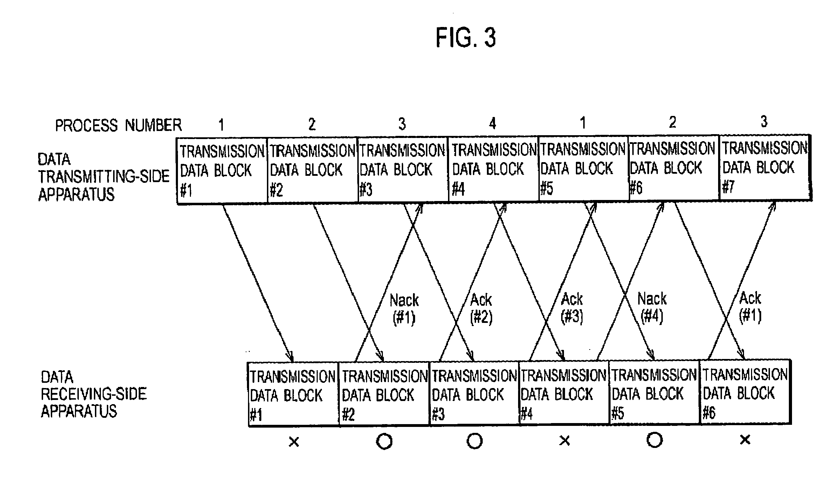

Moreover, in the HARQ, the efficiency in use of a radio link can be improved by transmitting the next transmission data block and subsequent transmission data blocks until a transmission acknowledgement signal is returned. As a simple method for performing the above, the Stop and wait is known. Referring to Fig. 3, an operation principle of the Stop and Wait including four processes will be briefly described.

As shown in Fig. 3, after the data transmitting-side apparatus has transmitted a transmission data block, time lag occurs until the data transmitting-side apparatus receives a transmission acknowledgement signal of the transmission data block. In an example of Fig. 3, since such time lag is not fewer than twice the transmission time of a transmission data block nor more than three times a transmission time thereof, timing at which the transmission data block is retransmitted is that after three transmission data blocks are transmitted.

In this case, as shown in Fig. 3, it is possible to assume that four sets of HARQs operate in parallel, which is referred to as the Stop and Wait including four processes.

The number N of HARQs for operating in parallel is determined according to the transmission time of the transmission data block, the time lag until a transmission acknowledgement signal is received, processing delay in the data transmitting-side apparatus and the data receiving-side apparatus, and the like, so that it is referred as the N Process Stop and Wait.
[Non-Patent Document 1] "W-CDMA Mobile Communication System", edited by Keiji Tachikawa, Maruzen Co-, Ltd.
[Non-Patent Document 2] 3GPP TR25.896 v6.0.0

The HARQ is excellent in the point that a transmission data block can be transmitted to the data receiving-side apparatus without fail. However, it has a disadvantage that a transmission acknowledgement signal (Ack or Nack) is transmitted over a radio link in the opposite direction (a downlink is used when transmitting the transmission data block over an uplink, and the uplink is used when transmitting the transmission data block over the downlink), which results in an increase in load on the radio link in the opposite direction.

Moreover, in the mobile communication system, there is known a technique for controlling a transmission rate of a signal according to an availability of a radio link, a radio quality, and the like (technique for determining a transmission data block size).

For example, as a system to which the technique is to be applied, there are known "HSDPA (High Speed Downlink Packet Access) and "EUL (Enhanced Uplink)" that are being standardized by 3GPP. Furthermore, in the system, the HARQ is to be applied.

In the system, the data receiving-side apparatus is configured to send a one-bit transmission acknowledgement signal indicating Ack or Nack regardless of a transmission block data size.

In other words, when a transmission data block size is large, the load of a one-bit transmission acknowledgement signal indicating Ack or Nack is appropriate for its purpose, but when a transmission data block size is small, the load of the one-bit transmission acknowledgement signal indicating Ack or Nack is not an allowable condition.

Moreover, consider that the sums of transmission data block sizes in certain radio links are equal to each other. When each transmission data block size is large, only a small number of transmission data blocks are transmitted, so that only a small number of transmission acknowledgement signals are generated.

On the other hand, when each transmission data block size is small, a large number of transmission data blocks are transmitted, so that a large number of transmission acknowledgement signals are transmitted. This causes a problem that the radio load on the radio link in the opposite direction is increased.

Furthermore, as mentioned above, an influence on the mobile communication system caused by the load on the radio link in the opposite direction depends on the congestion degree of the radio link in the opposite direction.

Specifically, when the congestion degree of the radio link in the opposite direction is small, the influence on the mobile communication system caused by the load on the radio link in the opposite direction is small. However, when the congestion degree of the radio link in the opposite direction is large, there is a problem that the influence on the mobile communication system caused by the load on the radio link in the opposite direction becomes large.

### [Disclosure of the Invention]

Accordingly, the present invention has been made in consideration of the aforementioned problems and aims to provide a mobile communication system, a base station, a radio base station and a radio network controller capable of improving a radio capacity when a retransmission control on a transmission data block is performed.

A first aspect of the present invention is summarized as a mobile communication system in which a data transmitting-side apparatus is configured to retransmit a transmission data block by using a data channel and a control channel according to a transmission acknowledgment signal transmitted from a data receiving-side apparatus, wherein the data transmitting-side apparatus includes: a maximum number-of-retransmissions manager unit configured to manage a transmission power ratio between the data channel and the control channel or the transmission data block size to be associated with the maximum number of retransmissions of the transmission data block; and a retransmitter unit configured to retransmit the transmission data block, until the number of retransmissions of the transmission data block reaches the maximum number of retransmissions associated with the transmission power ratio of the transmission data block or the transmission data block size.

In the first aspect of the present invention, the maximum number-of-retransmissions manager unit can be configured to set at least one of the maximum number of retransmissions to zero.

In the first aspect of the present invention, the maximum number-of -retransmissions manager unit can be conf igured to set, to zero, the maximum number of retransmissions of the transmission data block which is associated with the transmission power ratio or the transmission data block size smaller than a predetermined threshold value.

In the first aspect of the present invention, the maximum number-of-retransmissions manager unit can be configured to determine the transmission power ratio or the transmission data block size whose maximum number of retransmissions of the transmission data block is set to zero, in accordance with a link utilization state between the data transmitting-side apparatus and the data receiving-side apparatus.

In the first aspect of the present invention, the maximum number-of-retransmissions manager unit can be configured to determine the maximum number of retransmissions which is associated with the transmission power ratio of the transmission data block or the transmission data block size, in accordance with the link utilization state between the data transmitting-side apparatus and the data receiving-side apparatus.

In the first aspect of the present invention, the maximum number-of-retransmissions manager unit can be configured to set the maximum number of retransmissions of the transmission data block to be increased as the transmission power ratio or the transmission data block size increases.

In the first aspect of the present invention, the mobile communication system can further include: a radio network controller configured to notify the-maximum number-of-retransmissions manager unit of the maximum number of retransmissions which is associated with the transmission power ratio of the transmission data block or the transmission data block size.

In the first aspect of the present invention, the mobile communication system can further include: a radio network controller configured to notify the maximum number-of-retransmissions manager unit of the maximum transmission power ratio or the transmission data block size whose maximum number of retransmissions of the transmission data block is set to zero.

In the first aspect of the present invention, the mobile communication system can further include: a radio network controller configured to notify the maximum number-of-retransmissions manager unit of the minimum transmission power ratio or the transmission data block size whose maximum number of retransmissions of the transmission data block is set to greater than or equal to one.

A second aspect of the present invention is summarized as a mobile station configured to retransmit a transmission data block by using a data channel and a control channel according to a transmission acknowledgment signal transmitted from a radio base station including: a maximum number-of-retransmissions manager unit configured to manage a transmission power ratio between the data channel and the control channel or a transmission data block size to be associated with the maximum number of retransmissions of the transmission data block; and a retransmitter unit configured to retransmit the transmission data block, until the number of retransmissions of the transmission data block reaches the maximum number of retransmissions associated with the transmission power ratio of the transmission data block or the transmission data block size.

In the second aspect of the present invention, the maximum number-of-retransmissions manager unit can be configured to set at least one of the maximum number of retransmissions to zero.

In the second aspect of the present invention, the maximum number-of-retransmissions manager unit can be configured to set, to zero, the maximum number of retransmissions of the transmission data block which is associated with the transmission power ratio or the transmission data block size smaller than a predetermined threshold value.

In the second aspect of the present invention, the maximum number-of-retransmissions manager unit can be configured to determine the transmission power ratio or the transmission data block size whose maximum number of retransmissions of the transmission data block is set to zero, in accordance with a link utilization state between the mobile station and the radio base station.

In the second aspect of the present invention, the maximum number-of-retransmissions manager unit can be configured to determine the maximum number of retransmissions which is associated with the transmission power ratio of the transmission data block or the transmission data block size, in accordance with the link utilization state between the mobile station and the radio base station.

In the second aspect of the present invention, the maximum number-of-retransmissions manager unit can be configured to set the maximum number of retransmissions of the transmission data block to be increased as the transmission power ratio or the transmission data block size increases.

A third aspect of the present invention is summarized as a radio base station configured to retransmit a transmission data block by using a data channel and a control channel according to a transmission acknowledgment signal transmitted from a mobile station, including: a maximum number-of-retransmissions manager unit configured to manage a transmission power ratio between the data channel and the control channel or a transmission data block size to be associated with the maximum number of retransmissions of the transmission data block; and a retransmitter unit configured to retransmit the transmission data block, until the number of retransmissions of the transmission data block reaches the maximum number of retransmissions associated with the transmission power ratio of the transmission data block or the transmission data block size.

In the third aspect of the present invention, the maximum number-of-retransmissions manager unit can be configured to set at least one of the maximum number of retransmissions to zero.

In the third aspect of the present invention, the maximum number-of-retransmissions manager unit can be configured to set, to zero, the maximum number of retransmissions of the transmission data block which is associated with the transmission power ratio or the transmission data block size smaller than a predetermined threshold value.

In the third aspect of the present invention, the maximum number-of-retransmissions manager can be configured to determine the transmission power ratio or the transmission data block size whose maximum number of retransmissions of the transmission data block is set to zero, in accordance with a link utilization state between the mobile station and the radio base station.

In the third aspect of the present invention, the maximum number-of-retransmissions manager unit can be configured to determine the maximum number of retransmissions which is associated with the transmission power ratio of the transmission data block or the transmission data block size, in accordance with the link utilization state between the mobile station and the radio base station.

In the third aspect of the present invention, the maximum number-of-retransmissions manager unit can be configured to set the maximum number of retransmissions of the transmission data block to be increased as the transmission power ratio or the transmission data block size increases.

A fourth aspect of the present invention is summarized as a radio network controller used in a mobile communication system in which a data transmitting-side apparatus is configured to retransmit a transmission data block by using a data channel and a control channel according to a transmission acknowledgment signal transmitted from a data receiving-side apparatus, including: an notifying unit configured to notify the data transmitting-side apparatus of the maximum number of retransmissions of the transmission data block which is associated with a transmission power ratio between the data channel and the control channel or a transmission data block size, wherein the data transmitting-side apparatus is configured to retransmit the transmission data block, until the number of retransmissions of the transmission data block reaches the maximum number of retransmissions associated with the transmission power ratio of the transmission data block or the transmission data block size.

### [Brief Descriptions of the Drawings]

[Fig. 1] Fig. 1 is a sequence diagram showing an operation of a retransmission control processing in a conventional mobile communication system.
[Fig. 2] Fig. 2 is a view for illustrating soft combining in the conventional mobile communication system.
[Fig. 3] Fig. 3 is a view for illustrating the Stop and Wait in the conventional mobile communication system.
[Fig. 4] Fig. 4 is an entire configuration view in a mobile communication system according to an embodiment of the present invention.
[Fig. 5] Figs. 5 (a) and 5 (b) are functional block diagrams showing a radio base station and a baseband signal processor unit in the mobile communication system according to an embodiment of the present invention.
[Fig. 6] Fig. 6 is a functional block diagram of a MAC-e and layer 1 processor unit (configuration for an uplink) of the baseband signal processor unit of the radio base station in the mobile communication system according to an embodiment of the present invention.
[Fig. 7] Fig. 7 is a functional block diagram of a MAC-e function unit of the baseband signal processor unit (configuration for the uplink) of the radio base station of the mobile communication system according to an embodiment of the present invention.
[Fig. 8] Fig. 8 is a functional block diagram of a mobile station of the mobile communication system according to an embodiment of the present invention.
[Fig. 9] Fig. 9 is a functional block diagram of a baseband signal processor unit of the mobile communication system according to an embodiment of the present invention.
[Fig. 10] Fig. 10 is a functional block diagram of a MAC-e processor unit of the baseband signal processor unit of the mobile station of the mobile communication system according to an embodiment of the present invention.
[Fig. 11] Figs. 11 (a) and 11 (b) are views each illustrating an example of a transmission format table managed by the MAC-e processor unit of the baseband signal processor unit of the mobile station in the mobile communication system according to an embodiment of the present invention.
[Fig. 12] Figs. 12 (a) and 12 (b) are views each illustrating one example of a transmission format table managed by the MAC-e processor unit of the baseband signal processor unit of the mobile station in the mobile communication system according to an embodiment of the present invention.
[Fig. 13] Figs. 13 (a) and 13 (b) are views each illustrating one example of a transmission format table managed by the MAC-e processor unit of the baseband signal processor unit of the mobile station in the mobile communication system according to an embodiment of the present invention.
[Fig. 14] Fig. 14 is a functional block diagram of a layer 1 processor unit of the base band signal processor unit of the mobile station of the mobile communication system according to an embodiment of the present invention.
[Fig. 15] Fig. 15 is a functional block diagram of a radio network controller of the mobile communication system according to an embodiment of the present invention.
[Fig. 16] Fig. 16 is a sequence diagram illustrating an operation of the mobile communication system according to an embodiment of the present invention.

### [Best Mode for Carrying out the Invention]

### (Configuration of mobile communication system according to first embodiment of the present invention)

Descriptions will be given of the configuration of a mobile communication system according to an embodiment of the present invention with reference to Figs. 2 to 11. As illustrated in Fig.2, the mobile communication system according to the first embodiment of the present invention includes a plurality of mobile stations UE #1 to #8, a plurality of radio base stations Node B #1 to #5 and a radio network controller RNC.

In the mobile communication system according to this embodiment, a data transmitting-side apparatus (a mobile station UE or radio base station Node B) is configured to retransmit a transmission data block according to a transmission acknowledgement signal (Ack or Nack) transmitted from a data receiving-side apparatus (a radio base station Node B or a mobile station UE).

The present invention can be applied to each of the mobile communication in an uplink (the mobile communication where the data transmitting-side apparatus is a mobile station UE, and the data receiving-side apparatus is a radio base station Node B) and the mobile communication in a downlink (the mobile communication where the data transmitting-side apparatus is a radio base station Node B, and the data receiving-side apparatus is a mobile station UE).

Note that even in the case where the present invention is applied to either mobile communication, since the data transmitting-side apparatus and the data receiving-side apparatus have the same configuration, descriptions will be given of the case where the present invention is applied to the mobile communication in the uplink in which the data transmitting-side apparatus is the mobile station UE, and in which the data receiving-side apparatus is the radio base station Node B, in this embodiment.

Moreover, in the mobile communication system according to this embodiment, the "HSDPA" is used in the downlink, and the "EUL (Enhanced Uplink)" is used in the uplink. It should be noted that the retransmission control using the HARQ is performed in both the "HSDPA" and the "EUL."

Accordingly, in the uplink, used are an enhanced dedicated physical channel (E-DPCH) having an enhanced dedicated physical data channel (E-DPDCH) and an enhanced dedicated physical control channel (E-DPCCH), and a dedicated physical channel (DPCH) having a dedicated physical data channel (DPDCH) and a dedicated physical control channel (DPCCH).

Here, the enhanced dedicated physical control channel (E-DPCCH) transmits control data for EUL such as a transmission format number for defining a transmission format of E-DPDCH (transmission data block size, etc.), information on HARQ (the number of retransmissions, etc.) and information on scheduling (transmission power and buffer residence-volume and the like in the mobile station UE in the mobile station UE).

Moreover, the enhanced dedicated physical data channel (E-DPDCH) is associated with the enhanced dedicated physical control channel (E-DPGCH), and transmits user data for the mobile station UE according to the control data for EUL transmitted through the enhanced dedicated physical control channel (E-DPCCH).

The dedicated physical control channel (DPCCH) transmits control data such as a pilot symbol used in a RAKE combining, SIR measurement, and the like, a TFCI (Transport Format Combination Indicator) for identifying the transmission format of an uplink dedicated physical data channel (DPDCH), and a transmission power control bit for a downlink and the like.

Furthermore, the dedicated physical data channel (DPDCH) is associated with the dedicated physical control channel (DPCCH), and transmits user data for the mobile station UE according to the control data transmitted through the dedicated physical control channel (DPCCH). Note that in the case where user data that should be transmitted does not exist in the mobile station UE, the dedicated physical data channel (DPDCH) may be configured not to be transmitted.

Still furthermore, in the uplink, a high speed dedicated physical control channel (HS-DPCCH), which is required when the HSPDA is employed, and a random access channel (RACH) are also used.

The high speed dedicated physical control channel (HS-DPCCH) transmits a CPICH quality indicator (CQI) and a transmission acknowledgement signal (Ack or Nack) for the high speed dedicated physical data channel.

Note that descriptions in this embodiment will be given of the enhanced dedicated physical channel (E-DPCH), assuming that the present invention is applied to the E-DPCH configured to perform retransmission control using the HARQ.

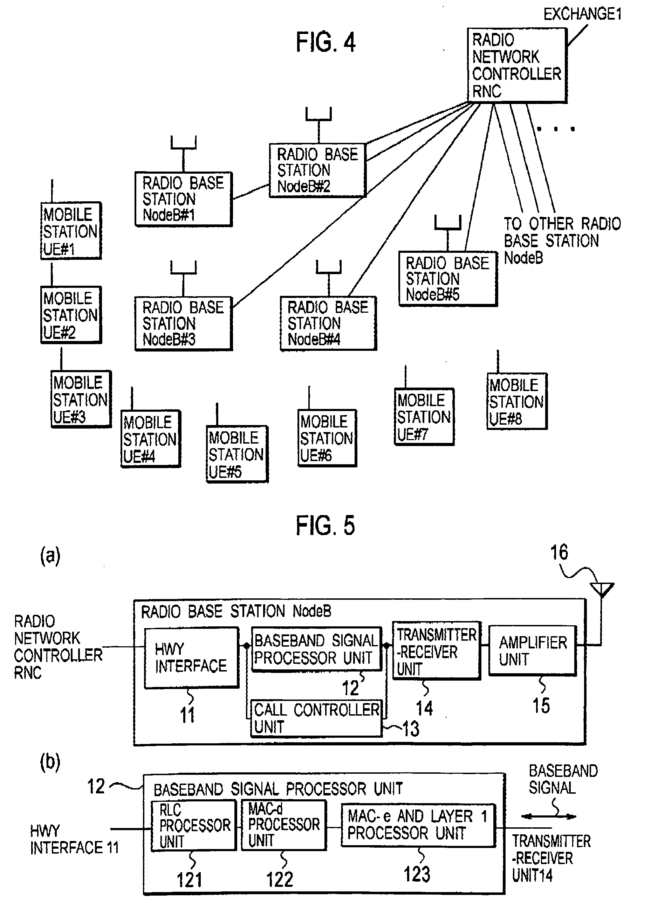

As shown in Fig. 5 (a), the radio base station Node B according to this embodiment includes a HWY interface 11, a baseband signal processor unit 12, a call controller unit 13, at least one transmitter-receiver unit 14, at least one amplifier unit 15, and at least one transmitter-receiver antenna 16.

The HWY interface 11 is an interface with a radio network controller RNC. More specifically, the HWY interface 11 is configured to receive, from the radio network controller RNC, user data to be transmitted to a mobile station UE via a downlink, and to input the user data to the baseband signal processor unit 12. Moreover, the HWY interface 11 is configured to receive control data for the radio base station Node B from the radio network controller RNC, and to input the control data to the call controller unit 13.

Furthermore, the HWY interface 11 is configured to acquire, from the baseband signal processor unit 12, user data included in uplink signals which are received from the mobile station UE via an uplink, and to transmit the user data to the radio network controller RNC. In addition, the HWY interface 11 is configured to acquire control data for the radio network controller RNC from the call controller unit 13 , and to transmit the control data to the radio network controller RNC.

The baseband signal processor unit 12 is configured to generate baseband signals by performing a MAC layer processing and a layer-1 processing on the user data acquired from the HWY interface 11, and to forward the generated baseband signals to the transmitter-receiver unit 14.

Here, the MAC layer processing in the downlink includes a scheduling processing, a transmission rate control processing, and the like. Moreover, the layer-1 processing in the downlink includes a channel encoding processing, and a spreading processing for user data, and the like.

Additionally, the baseband signal processor unit 12 is configured to extract user data by performing the MAC layer processing and the layer-1 processing on the baseband signals acquired from the transmitter-receiver unit 14, and to forward the extracted user data to the HWY interface 11.

Here, the MAC layer processing in the uplink includes a MAC control processing, a header disposal processing, and the like. Furthermore, the layer-1 processing in the downlink includes a despreading processing, a RAKE combining processing, an error correction decoding processing, and the like.

Note that specific functions of the baseband signal processor unit 12 will be described later. Furthermore, the call controller unit 13 is that for performing a call control processing according to the control data acquired from the HWY interface 11.

The transmitter-receiver unit 14 is configured to perform processing for converting the baseband signals, which are acquired from the baseband signal processor unit 12, into the radio frequency band signals (downlink signals), and to transmit the radio frequency signals to the amplifier unit 15. Moreover, the transmitter-receiver unit 14 is configured to perform processing for converting the radio frequency band signals (uplink signals), which are acquired from the amplifier unit 15, into the baseband signals, and to transmit the baseband signals to the baseband signal processor unit 12.

The amplifier unit 15 is configured to amplify the downlink signals acquired from the transmitter-receiver unit 14, and to transmit the amplified downlink signals to the mobile station UE via the transmitter-receiver antenna 16. Furthermore, the amplifier unit 15 is configured to amplify the uplink signals received by the transmitter-receiver antenna 16, and to transmit the amplified uplink signals to the transmitter-receiver unit 14.

As shown in Fig. 5 (b), the baseband signal processor unit 12 includes a RLC processor unit 121, a MAC-d processor unit 122, a MAC-e and layer 1 processor unit 123.

The MAC-e and layer 1 processor unit 123 is configured to perform a despreading processing, a RAKE combining processing, a HARQ processing, and the like, on the baseband signal acquired from the transmitter-receiver unit 14.

The MAC-d processor unit 122 is configured to perform a disposal processing of the header, or the like, on an output signal from the MAC-e and layer 1 processor unit 123.

The RLC processor unit 121 is configured to perform a retransmission control processing of an RLC layer, a reconfiguration process of an RLC-SDU, and the like, on the on the MAC-d processor unit 122.

However, it should be noted that these functions are not clearly classified with hardware, so that they may be realized by software.

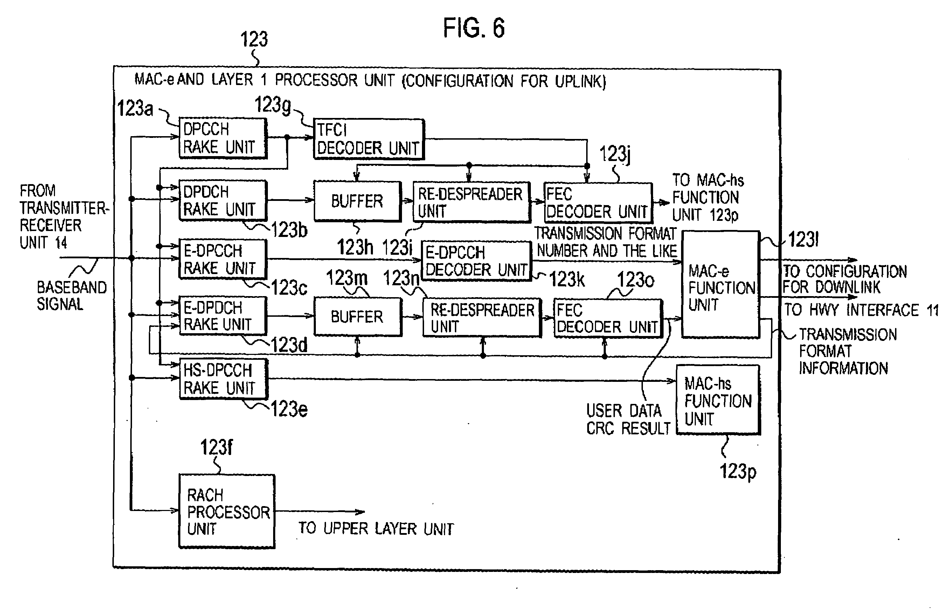

As shown in Fig. 6, the MAC-e and layer 1 processor unit (configuration for uplink) 123 includes: a DPCCH RAKE unit 123a; a DPDCH RAKE unit 123b; an E-DPCCH RAKE unit 123c; an E-DPDCH RAKE unit 123d; an HS-DPCCH RAKE unit 123e; an RACH processor unit 123f; a TFCI decoder unit 123g; buffers 123h and 123m; re-despreader units 123i and 123n; FEC decoder units 123j and 123p; an E-DPCCH decoder unit 123k; a MAC-e function unit 1231; and a MAC-hs function unit 123q.

The E-DPCCH RAKE unit 123c is configured to perform, on the enhanced dedicated physical control channel (E-DPCCH) in the baseband signals transmitted from the transmitter-receiver unit 14, the despreading processing and the RAKE combining processing using a pilot symbol included in the dedicated physical control channel (DPCCH)

The E-DPCCH decoder unit 123k is configured to acquire the transmission format number, the information on HARQ, the information concerning scheduling, and the like, by performing a decoding processing on the RAKE combining outputs of the E-DPCCH RAKE unit 123c, and to input the information to the MAC-e function unit 1231.

The E-DPDCH RAKE unit 123d is configured to perform, on the enhanced dedicated physical data channel (E-DPDCH) in the base band signals transmitted from the transmitter-receiver unit 14, the despreading processing using the transmission format information (number of codes) transmitted from the MAC-e function unit 1231 and the RAKE combining processing using the pilot symbol included in the dedicated physical control channel (DPCCH).

The buffer 123m is configured to store the RAKE combining outputs of the E-DPDCH RAKE unit 123d according to the transmission format information (number of symbols) transmitted from the MAC-e function unit 1231.

The re-despreader unit 123n is configured to perform a despreading processing on the RAKE combining outputs of the E-DPDCH RAKE unit 123d stored in the buffer 123m, according to transmission format information (a spreading ratio) transmitted from the MAC-e function unit 1231.

The FEC decoder unit 1230 is configured to perform the error correction decoding processing (an FEC decoding processing) on the outputs of the re-despreader unit 123n, according to the transmission format information (transmission data block size) transmitted from the MAC-e function unit 1231.

The MAC-e function unit 1231 is configured to calculate and output transmission format information (the number of codes, the number of symbols, a spreading ratio, a transmission data block size, and the like), according to the transmission format number, the information on HARQ, and the information on scheduling, and the like, which are acquired from the E-DPCCH decoder unit 123k.

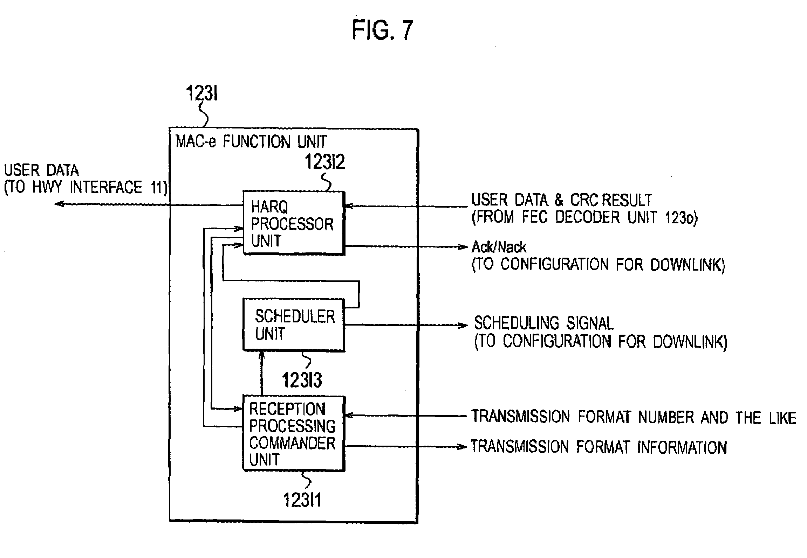

Furthermore, as shown in Fig. 7, the MAC-e function unit 1231 includes a reception processing commander unit 12311, a HARQ processor unit 12312, and a scheduler unit 12313.

The reception processing commander unit 12311 is configured to transmit, to the HARQ processor unit 12312, the transmission format number, the information on HARQ, and the information on scheduling inputted from the E-DPCCH decoder unit 123k, as well as the user data inputted and a CRC result from the FEC decoder unit 12030.

Moreover, the reception processing commander unit 12311 is configured to transmit, to the scheduler unit 12313, the information on scheduling inputted from the E-DPCCH decoder unit 1230.

Additionally, the reception processing commander unit 12311 is configured to output transmission format information corresponding to the transmission format number inputted from the E-DPCCH decoder unit 123o.

The HARQ processor unit 12312 determines whether or not a receiving processing on user data is successful, in response to the CRC result inputted from the FEC decoder unit 1230. In addition, the HARQ processor unit 12312 generates a transmission acknowledgement signal (Ack or Nack) in response to the determined result, and transmits the transmission acknowledgement signal to configuration for the downlink of the baseband signal processor unit 12. Furthermore, when the above determined result is OK, the HARQ processor unit 12312 transmits the user data inputted from the FEC decoder unit 123o, to the radio network controller RNC.

The scheduler unit 12313 decides whether or not transmission should be performed at each mobile station UE, and decides a transmission rate (a transmission data block size, or a transmission power ratio of a data channel to a control channel) at each mobile station, the maximum allowable transmission power (the maximum allowable transmission power of E-DPCCH and E-DPDCH) at each mobile station UE, or the like, and then transmits the determined results to the configuration for a downlink of the baseband signal processor unit 12, according to the received information on scheduling and the like.

Note that the scheduler unit 12313 may be configured to decide the transmission rate at each mobile station UE, according to the congestion degree of the uplink, the radio quality, and the like. Moreover, the scheduler unit 12313 may be configured to set an upper limit for the maximum allowable transmission power, according to the transmission capability of a mobile station.

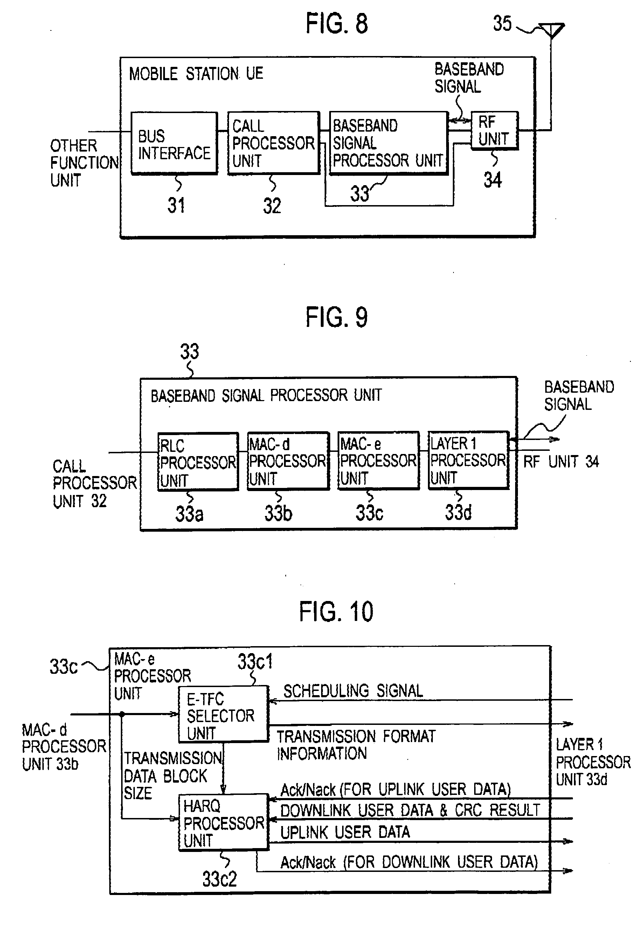

As shown in Fig. 8, the mobile station UE according to this embodiment includes a path interface 31, a call processor unit 32, a base band processor unit 33, a RF unit 34, and a transmitter-receiver antenna 36.

However, such functions may exist independently as hardware, and may be partly or entirely integrated, or may be configured through a process of software.

The bus interface 31 is configured to forward the user data outputted from the call processor unit 32, to another function unit (for example, an application related function unit). Furthermore, the bus interface 31 is configured to forward the user data transmitted from another function unit (for example, the application related function unit), to the call processor unit 32.

The call processor unit 32 is configured to perform the call control processing for transmitting and receiving the user data.

The baseband signal processor unit 33 is configured to transmit, to the call processor unit 32, the user data acquired in a way that the baseband signals transmitted from the RF unit 34 is subjected to: the layer-1 processing including the despreading processing, the RAKE combining processing and the FEC decoding processing; the MAC processing including the MAC-e processing and the MAC-d processing; and the RLC processing.

Moreover, the baseband signal processor unit 33 is configured to generate baseband signals by performing the RLC processing, the MAC processing, or the layer-1 processing on the user data transmitted from the call processor unit 32, and to transmit the baseband signals to the RF unit 34.

Note that the detailed functions of the baseband signal processor unit 33 will be described later. The RF unit 34 is configured to generate baseband signals by performing a detection processing, a filtering processing, a quantization processing, and the like, on radio frequency signals received through the transmitter-receiver antenna 35, and to transmit the baseband signals to the baseband signal processor unit 33. Furthermore, the RF unit 34 is configured to convert the baseband signals transmitted from the baseband signal processor unit 33 into the radio frequency signals.

As shown in Fig. 9, the baseband signal processor unit 33 includes a RLC processor unit 33a, a MAC-d processor unit 33b, a MAC-e processor unit 33c, and a layer 1 processor unit 33d.

The RLC processor unit 33a is configured to perform a processing in an upper layer of a layer-2 on the user data transmitted from the call processor unit 32, and to transmit the processed user data to the MAC-d processor unit 33b.

The MAC-d processor unit 33b is configured to grant a channel identifier header, and to create a transmission format in the uplink, according to the limitation of transmission power in the uplink.

As shown in Fig. 10, the MAC-e processor unit 33c includes an E-TFC selector unit 33c1, and a HARQ processor unit 33c2.

The E-TFC selector unit 33c1 is configured to determine transmission formats (E-TFC) of the enhanced dedicated physical data channel (E-DPDCH) and the enhanced dedicated physical control channel (E-DPCCH), according to the scheduling signals transmitted from the radio base station Node B.

Furthermore, the E-TFC selector unit 33c1 transmits, to the layer 1 processor unit 33d, transmission format information (transmission data block size, a transmission power ratio of an enhanced dedicated physical data channel (E-DPDCH) and an enhanced dedicated physical control channel (E-DPCCH), and the like) on the determined transmission formats, and at the same time, transmits the determined transmission data block size or transmission power ratio to the HARQ processor unit 33c2.

Here, the scheduling signals maybe those designating the transmission data block size, or those designating the transmission power ratio of the enhanced dedicated physical data channel (E-DPDCH) to the enhanced dedicated physical control channel (E-DPCCH), or may be those simply indicating UP/DOWN.

The HARQ processor unit 33c2 is configured to perform process management of the N process Stop and Wait, and to perform transmission of uplink user data according to a transmission acknowledgement signal (Ack/Nack for up data) received from a radio base station Node B.

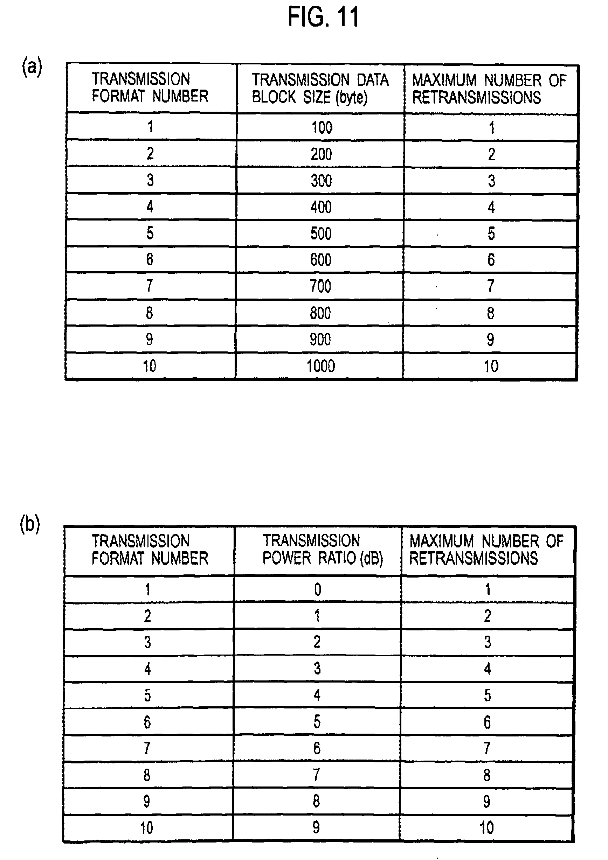

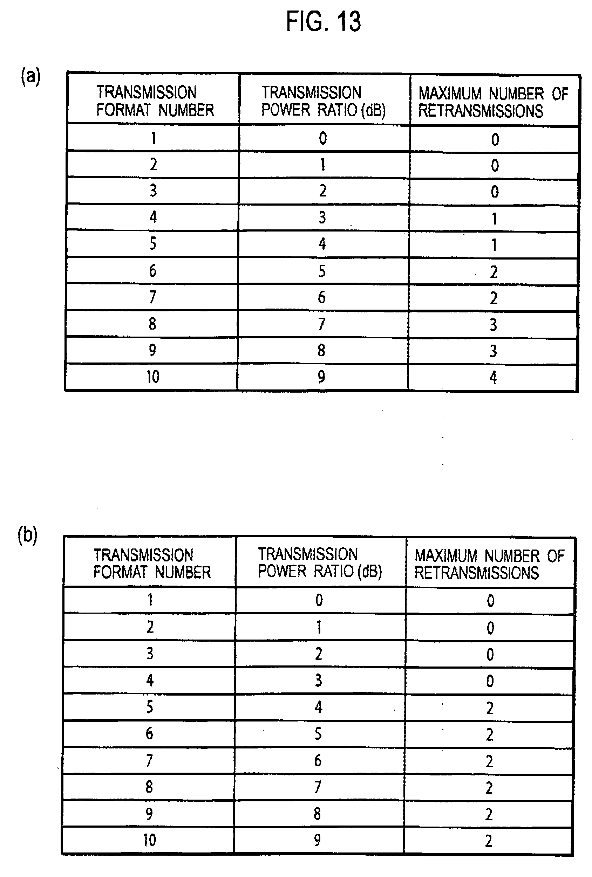

Furthermore, the HARQ processor unit 33c2 stores transmission format tables as shown in Figs. 11 (a) and 13 (b) and retransmits the transmission data block, when receiving a Nack, and when the number of retransmissions of a specific transmission data block (user data) is less than the maximum number of retransmissions corresponding to the transmission data block size (or the transmission power ratio). The HARQ processor unit 33c2 transmits the next transmission data block, when receiving an Ack, or when the number of retransmissions of a specific transmission data block (user data) reaches the maximum number of retransmissions corresponding to the transmission data block size (or the transmission power ratio)

Here, it is assumed that the transmission power ratio is calculated by "transmission power of enhanced dedicated physical data channel (E-DPDCH)/transmission power of enhanced dedicated physical data channel (E-DPCCH)".

Moreover, as shown in Figs. 11 to 14, in each transmission format table, the maximum number of retransmissions is decided for every transmission data block size or the transmission power ratio.

Fig. 11 (a) shows an example of the transmission format table in which the maximum number of retransmissions is defined for every transmission data block size. Moreover, Fig. 11 (b) shows an example of the transmission format table in which the maximum number of retransmissions is defined for every transmission power ratio.

In the transmission format tables shown in Figs. 11 (a) and 11 (b), it is set such that the maximum number of retransmissions of the transmission data block increases as the transmission data block size or the transmission power ratio increases, and that the maximum number of retransmissions of the transmission data block decreases as the transmission data block size or the transmission power ratio decreases.

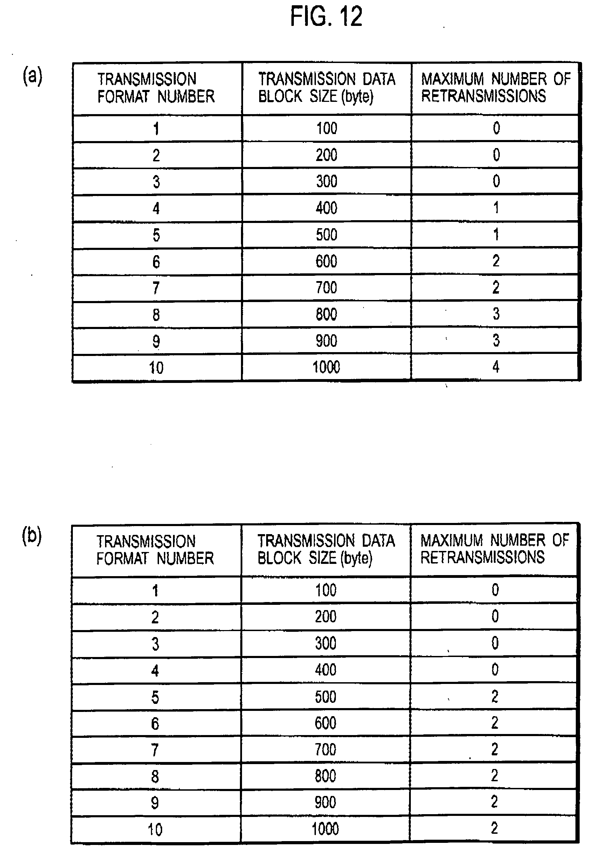

Furthermore, as shown in Fig. 12 (a) to 13 (b), in each transmission format table, at least one of the maximum numbers of retransmissions may be set to zero.

In the transmission format table shown in Fig. 12 (a), it is set such that the maximum number of retransmissions of the transmission data block increases as the transmission data block size increases, and that the maximum number of retransmissions of the transmission data block decreases (which includes zero) as the transmission data block size ratio decreases.

In the transmission format table shown in Fig. 12 (b), set are two kinds of the maximum number of retransmissions, zero and twice (greater than equal to one).

In other words, the HARQ processor unit 33c2 can select whether or not the transmission data block should be retransmitted for every transmission data block size by use of the transmission format table shown in Fig. 12 (b).

Figs- 13 (a) and 13 (b) show examples of the transmission format tables in which the maximum number of retransmissions is defined for every transmission power ratio.

In the transmission format table shown in Fig. 13 (a), it is set such that the maximum number of retransmissions of the transmission data block increases as the transmission power ratio increases, and that the maximum number of retransmissions of the transmission data block decreases (which includes zero) as the transmission power ratio decreases.

In the transmission format table shown in Fig. 13 (b), set are two kinds of the maximum number of retransmissions, zero and twice (greater than or equal to one).

In other words, the HARQ processor unit 33c2 can select whether or not the transmission data block should be retransmitted for every transmission power ratio by use of the transmission format table shown in Fig. 13 (b).

The aforementioned transmission format tables may be set in the mobile communication system in a fixed manner or may be set according to an instruction from the radio network controller RNC.

Moreover, the aforementioned transmission format tables may be configured such that the maximum number of retransmissions of the transmission data block, which is associated with the transmission power ratio or the transmission data block size which is smaller than a predetermined threshold value (500 bytes in the example of Fig. 12 (b) and 4dB in the example of 13 (b)), is set to zero.

Furthermore, the aforementioned transmission format tables may be configured to determine the transmission data block size or the transmission power ratio whose maximum number of retransmissions of the transmission data block is set to zero, in accordance with a link utilization state between the mobile station UE (data transmitting-side apparatus) and the radio base station Node B (data receiving-side apparatus).

For example, when determining that the downlink is not in a congested state, the HARQ processor unit 33c2 may reduce the maximum transmission block size or the transmission power ratio whose maximum number of retransmissions is set to zero, and create a transmission format table such that priority is placed on retransmission of the transmission data block in the uplink.

On the other hand, when determining that the downlink is in a congested state, the HARQ processor unit 33c2 may increase the maximum transmission block size or the transmission power ratio whose maximum number of retransmissions is set to zero, and reduce the number of transmissions of the transmission acknowledgement signal in the downlink in the transmission format table.

Furthermore, the aforementioned transmission format tables may be configured to decide the maximum number of retransmissions which is associated with the transmission data block size of the transmission data block or the transmission power ratio, in accordance with a link utilization state between the mobile station UE (data transmitting-side apparatus) and the radio base station Node B (data receiving-side apparatus) .

For example, when determining that the downlink is not in a congested state, the HARQ processor unit 33c2 may be configured to increase the maximum number of retransmissions, which is associated with each transmission data block size or each transmission power ratio, in the transmission format table.

On the other hand, when determining that the downlink is in a congested state, the HARQ processor unit 33c2 may be configured to decrease the maximum number of retransmissions, which is associated with each transmission data block size or each transmission power ratio, in the transmission format table.

Moreover, the HARQ processor unit 33c2 determines whether or not a reception processing of downlink user data has been successful in response to the CRC result inputted from the layer-1 processor unit 33d. Then, the HARQ processor unit 33c2 generates and transmits a transmission acknowledgement signal (Ack or Nack for downlink user data) to the layer-1 processor unit 33d, in response to the aforementioned determination result. Furthermore, when the aforementioned determination result is OK, the HARQ processor unit 33c2 transmits, to the layer-1 processor unit 33d, the downlink user data inputted from the layer-1 processor unit 33d.

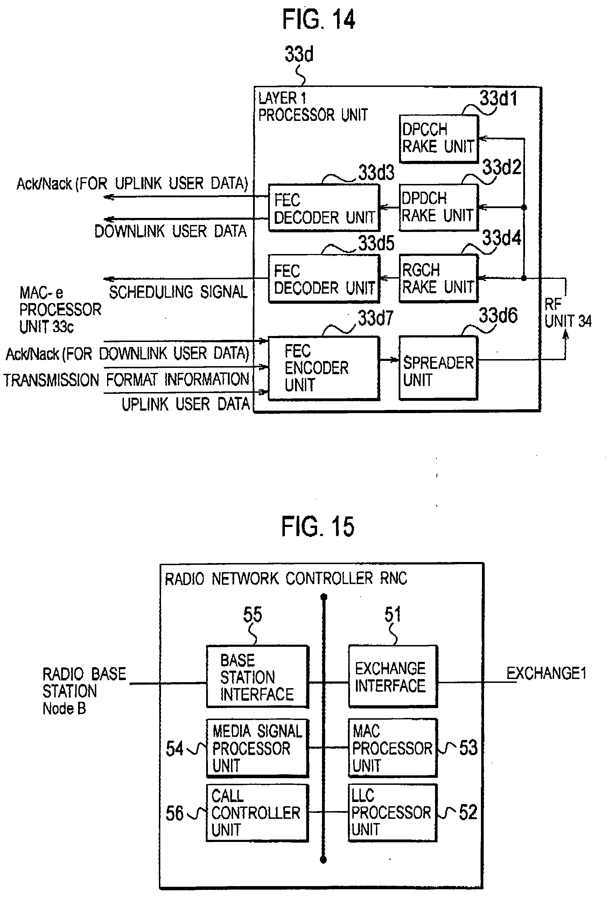

As shown in Fig. 14, the layer 1 processor unit 33d includes a DPCCH RAKE unit 33d1, a DPDCH RAKE unit 33d2, a RGCH RAKE unit 33d4, a spreader unit 33d6, an FEC encoder unit 33d7, and FEC decoder units 33d3 and 33d5.

The DPDCH RAKE unit 33d2 is configured to perform the despreading processing and the RAKE combining processing on the dedicated physical data channel (DPDCH) in the downlink signals transmitted from the RF unit 34, and to output the processed DPDCH to the FEC decoder unit 33d3.

The FEC decoder unit 33d3 is configured to perform the FEC decoding processing on the RAKE combining outputs of the DPDCH RAKE unit 33d2, and to extract the downlink user data so as to be transmitted to the MAC-e processor unit 33c. Moreover, the FEC decoder unit 33d3 is configured to transmit the result of CRC performed on downlink user data, to the MAC-e processor unit 33c.

The RGCH RAKE unit 33d4 is configured to perform a despreading processing and a RAKE combining processing on a relative grant channel (RGCH), in the downlink signal transmitted from the RF unit 34, and to output the processed RGCH to the FEC decoder unit 33d5.

The FEC decoder unit 33d5 is configured to perform the FEC decoding processing on the RAKE combining outputs of the RGCH RAKE unit 33d4, and to extract scheduling signals so as to be transmitted to the MAC-e processor unit 33c. Note that the scheduling signals include the maximum allowable transmission rate in the uplink (the transmission data block size, or the transmission power ratio of the enhanced dedicated physical data channel (E-DPDCH) to the enhanced dedicated physical control channel (E-DPCCH)) and the like.

The FEC encoder unit 33d7 is configured to perform the FEC encoding processing on the user data transmitted from the MAC-e processor unit 33c, by using the transmission format information transmitted from the MAC-e processor unit 33c, according to the transmission acknowledgement signal transmitted from the MAC-e processor unit 33c (Ack/Nack for down user data), and to transmit the processed user data to the spreader unit 33d6.

The spreader unit 33d6 is configured to perform the spreading processing on the uplink user data transmitted from the FEC encoder unit 33d7, and to transmit the,processed uplink user data to the RF unit 34.

The radio network controller RNC according to this embodiment is an apparatus located in an upper level of the radio base station Node B, and is configured to control radio communications between the radio base station Node B and the mobile station UE.

As shown in Fig. 15, the radio network controller RNC according to this embodiment includes an exchange interface 51, an LLC layer processor unit 52, a MAC layer processor unit 53, a media signal processor unit 54, a base station interface 55, and a call controller unit 56.

The exchange interface 51 is an interface with an exchange 1. The exchange interface 51 is configured to forward the downlink signals transmitted from the exchange 1, to the LLC layer processor unit 52, and to forward the uplink signals transmitted from the LLC layer processor unit 52, to the exchange 1.

The LLC layer processor unit 52 is configured to perform a LLC (Logical Link Control) sub-layer processing such as a combining processing of a header such as a sequence number or a trailer. The LLC layer processor unit 52 is configured to transmit the uplink signals to the exchange interface 51, and to transmit the downlink signals to the MAC layer processor unit 53, after the LLC sub-layer processing is performed.

The MAC layer processor unit 53 is configured to perform the MAC layer processing such as a priority control processing, a header granting processing and the like. The MAC layer processor unit 53 is configured to transmit the uplink signals to the LLC layer processor unit 52, and to transmit the downlink signals to the radio base station interface 55 (or the media signal processor unit 54), after the MAC layer processing is performed.

The media signal processor unit 54 is configured to perform a media signal processing on voice signals or real time image signals. The media signal processor unit 54 is configured to transmit the uplink signals to the MAC layer processor unit 53, and to transmit the downlink signals to the radio base station interface 55, after the media signal processing is performed.

The base station interface 55 is an interface with the radio base station Node B. The base station interface 55 is configured to forward the uplink signals transmitted from the radio base station Node B, to the MAC layer processor unit 53 (or to the media signal processor unit 54), and to forward the downlink signals transmitted from the MAC layer processor unit 53 (or from the media signal processor unit 54), to the radio base station Node B.

The call controller unit 56 is configured to perform a call reception control processing, a channel setup and a release processing by layer-3 signaling and the like.

Moreover, the call controller unit 56 is configured to transmit, to the mobile station UE and the radio base station Node B, information for generating the transmission format tables as shown in Figs. 11 (a) to 13 (b).

The call controller unit 56 may be configured to notify the mobile station UE (data transmitting-side apparatus) of the maximum number of retransmissions of the transmission data block which is associated with the transmission data block size of the transmission data block or the transmission power ratio.

The call controller unit 56 may be configured to notify the mobile station UE (data transmitting-side apparatus) of the transmission data block size or the transmission power ratio whose maximum number of retransmissions of the transmission data block is set to zero.

Moreover, the call controller unit 56 may be configured to notify the mobile station UE (data transmitting-side apparatus) of the maximum transmission data block size or transmission power ratio whose maximum number of retransmissions of the transmission data block is set to zero.

Furthermore, the call controller unit 56 may be configured to notify the mobile station UE (data transmitting-side apparatus) of the minimum transmission data block size or transmission power ratio whose maximum number of retransmissions of the transmission data block is set to greater than or equal to one.

Still furthermore, the call controller unit 56 may be configured to create a transmission format table, in accordance with a link utilization state between the mobile station UE (data transmitting-side apparatus) and the radio base station Node B (data receiving-side apparatus).

For example, when the downlink is not in congested state, the call controller unit 56 may reduce the maximum transmission block size or transmission power ratio whose maximum number of retransmissions of the transmission data block is set to zero, and create a transmission format table such that priority is placed on retransmission of the transmission data block in the uplink.

Moreover, when the downlink is in a congested state, the call controller unit 56 may increase the maximum transmission block size or transmission power ratio whose maximum number of retransmissions is set to zero in the transmission format table, and reduce the transmission of the transmission acknowledgement signals in the downlink.

Furthermore, when the downlink is not in a congested state, the call controller unit 56 may be configured to increase the maximum number of retransmissions,'which is associated with each transmission data block size or each transmission power ratio, in the transmission format table.

On the other hand, when the downlink is in a congested state, the call controller unit 56 may be configured to decrease the maximum number of retransmissions, which is associated with each transmission data block size or each transmission power ratio in the transmission format table.

In addition, the call controller unit 56 can create a different transmission format table for every priority class which is set for every type of channel and for every mobile station.

### (operations of mobile communication system according to first embodiment of the present invention)

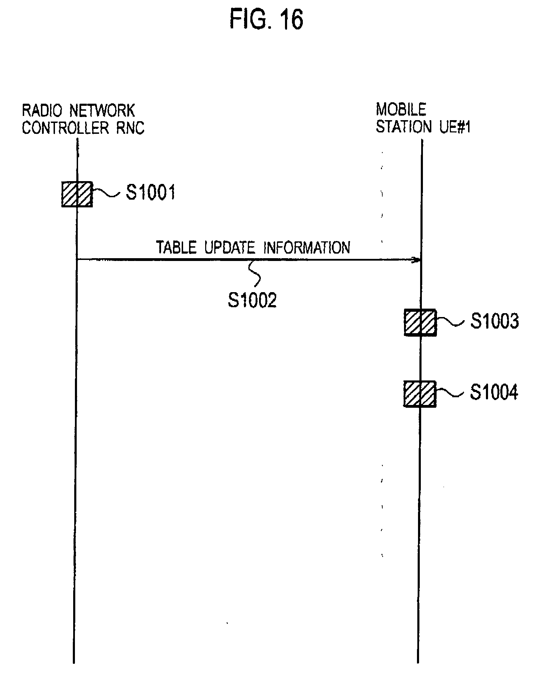

An explanation will be given of operations of the mobile communication system according to the first embodiment of the present invention with reference to Fig. 16.

As shown in Fig. 16, in step S101, the call controller unit 56 of the radio network controller RNC determines a transmission format table for use in the mobile station UE according to the congestion degree of a downlink between the mobile station UE (data transmitting-side apparatus) and the radio base station Node B (data receiving-side apparatus) (for example, in comparison with congestion degree between the downlink and the uplink) .

In step S102, the call controller unit 56 of the radio network controller RNC transmits, to the mobile station UE, information (table update information) for creating the decided transmission format table.

In step S103, the HARQ processor unit 33c2, which configures the MAC-e processor unit 33c in the baseband signal processor unit 33 of the mobile station UE, creates a transmission format table for use in transmission of the enhanced dedicated physical control channel (E-DPCCH) and the enhanced dedicated physical data channel (E-DPDCH) to the radio base station Node B, in accordance with the received table update information.

In step S104, the HARQ processor unit 33c2 performs a retransmission control processing in the following transmission of the enhanced dedicated physical control channel (E-DPCCH) and the enhanced dedicated physical data channel. (E-DPDCH), using the aforementioned transmission format table.

### (Advantageous effects of mobile communication system according to first embodiment of the present invention)

According to the mobile communication system of the first embodiment of the present invention, the maximum number of retransmissions of the transmission data block can be controlled for every transmission data block or the transmission power ratio, and therefore, it is possible to reduce an influence on radio capacity of the downlink of the transmission acknowledgement signal in the downlink.

Moreover, according to the mobile communication system of the first embodiment of the present invention, the maximum number of retransmissions of the transmission data block can be changed according to the congestion degree of the uplink or the downlink, and therefore, it is possible to keep the balance of the radio capacity of the uplink and of the radio capacity of the downlink.

Furthermore, according to the mobile communication system of the first embodiment of the present invention, the maximum number of retransmissions of the small-size transmission data block is set to zero, thereby making it possible to set the transmission acknowledgement signal to be transmitted one time or no transmission acknowledgment signal to be transmitted (namely, the HARQ is set to OFF).

### [Industrial Applicability]

As described above, according to the present invention, it is possible to provide a mobile communication system, a base station, a radio base station and a radio network controller capable of improving a radio capacity when a retransmission control on a transmission data block is performed.

## Claims

1. A mobile communication system in which a data transmitting-side apparatus is configured to retransmit a transmission data block by using a data channel and a control channel according to a transmission acknowledgment signal transmitted from a data receiving-side apparatus, wherein the data transmitting-side apparatus comprises:
a maximum number-of-retransmissions manager unit configured to manage a transmission power ratio between the data channel and the control channel or the transmission data block size to be associated with the maximum number of retransmissions of the transmission data block; and
a retransmitter unit configured to retransmit the transmission data block, until the number of retransmissions of the transmission data block reaches the maximum number of retransmissions associated with the transmission power ratio of the transmission data block or the transmission data block size.

2. The mobile communication system according to claim 1, wherein the maximum number-of-retransmissions manager unit is configured to set at least one of the maximum number of retransmissions to zero.

3. The mobile communication system according to claim 1, wherein the maximum number-of-retransmissions manager unit is configured to set, to zero, the maximum number of retransmissions of the transmission data block which is associated with the transmission power ratio or the transmission data block size smaller than a predetermined threshold value.

4. The mobile communication system according to claim 1, wherein the maximum number-of-retransmissions manager unit is configured to determine the transmission power ratio or the transmission data block size whose maximum number of retransmissions of the transmission data block is set to zero, in accordance with a link utilization state between the data transmitting-side apparatus and the data receiving-side apparatus.

5. The mobile communication system according to claim 1, wherein the maximum number-of-retransmissions manager unit is configured to determine the maximum number of retransmissions which is associated with the transmission power ratio of the transmission data block or the transmission data block size, in accordance with the link utilization state between the data transmitting-side apparatus and the data receiving-side apparatus.

6. The mobile communication system according to claim 1, wherein the maximum number-of-retransmissions manager unit is configured to set the maximum number of retransmissions of the transmission data block to be increased as the transmission power ratio or the transmission data block size increases.

7. The mobile communication system according to any one of claims 1 to 6, further comprising:
a radio network controller configured to notify the-maximum number-of-retransmissions manager unit of the maximum number of retransmissions which is associated with the transmission power ratio of the transmission data block or the transmission data block size.

8. The mobile communication system according to claim 6, further comprising:
a radio network controller configured to notify the maximum number-of-retransmissions manager unit of the maximum transmission power ratio or the transmission data block size whose maximum number of retransmissions of the transmission data block is set to zero.

9. The mobile communication system according to claim 6, further comprising:
a radio network controller configured to notify the maximum number-of-retransmissions manager unit of the minimum transmission power ratio or the transmission data block size whose maximum number of retransmissions of the transmission data block is set to greater than or equal to one.

10. A mobile station configured to retransmit a transmission data block by using a data channel and a control channel according to a transmission acknowledgment signal transmitted from a radio base station comprising:
a maximum number-of-retransmissions manager unit configured to manage a transmission power ratio between the data channel and the control channel or a transmission data block size to be associated with the maximum number of retransmissions of the transmission data block; and
a retransmitter unit configured to retransmit the transmission data block, until the number of retransmissions of the transmission data block reaches the maximum number of retransmissions associated with the transmission power ratio of the transmission data block or the transmission data block size.

11. The mobile station according to claim 10, wherein the maximum number-of-retransmissions manager unit is configured to set at least one of the maximum number of retransmissions to zero.

12. The mobile station according to claim 10, wherein the maximum number-of-retransmissions manager unit is configured to set, to zero, the maximum number of retransmissions of the transmission data block which is associated with the transmission power ratio or the transmission data block size smaller than a predetermined threshold value.

13. The mobile station according to claim 10, wherein the maximum number-of-retransmissions manager unit is configured to determine the transmission power ratio or the transmission data block size whose maximum number of retransmissions of the transmission data block is set to zero, in accordance with a link utilization state between the mobile station and the radio base station.

14. The mobile station according to claim 10, wherein the maximum number-of-retransmissions manager unit is configured to determine the maximum number of retransmissions which is associated with the transmission power ratio of the transmission data block or the transmission data block size, in accordance with the link utilization state between the mobile station and the radio base station.

15. The mobile station according to claim 10, wherein the maximum number-of-retransmissions manager unit is configured to set the maximum number of retransmissions of the transmission data block to be increased as the transmission power ratio or the transmission data block size increases.

16. A radio base station configured to retransmit a transmission data block by using a data channel and a control channel according to a transmission acknowledgment signal transmitted from a mobile station, comprising:
a maximum number-of-retransmissions manager unit configured to manage a transmission power ratio between the data channel and the control channel or a transmission data block size to be associated with the maximum number of retransmissions of the transmission data block; and
a retransmitter unit configured to retransmit the transmission data block, until the number of retransmissions of the transmission data block reaches the maximum number of retransmissions associated with the transmission power ratio of the transmission data block or the transmission data block size.

17. The radio base station according to claim 16, wherein the maximum number-of-retransmissions manager unit is configured to set at least one of the maximum number of retransmissions to zero.

18. The radio base station according to claim 16, wherein the maximum number-of-retransmissions manager unit is configured to set, to zero, the maximum number of retransmissions of the transmission data block which is associated with the transmission power ratio or the transmission data block size smaller than a predetermined threshold value.

19. The radio base station according to claim 16, wherein the maximum number-of-retransmissions manager is configured to determine the transmission power ratio or the transmission data block size whose maximum number of retransmissions of the transmission data block is set to zero, in accordance with a link utilization state between the mobile station and the radio base station.

20. The radio base station according to claim 16, wherein the maximum number-of-retransmissions manager unit is configured to determine the maximum number of retransmissions which is associated with the transmission power ratio of the transmission data block or the transmission data block size, in accordance with the link utilization state between the mobile station and the radio base station.

21. The radio base station according to claim 16, wherein the maximum number-of-retransmissions manager unit is configured to set the maximum number of retransmissions of the transmission data block to be increased as the transmission power ratio or the transmission data block size increases.

22. A radio network controller used in a mobile communication system in which a data transmitting-side apparatus is configured to retransmit a transmission data block by using a data channel and a control channel according to a transmission acknowledgment signal transmitted from a data receiving-side apparatus, comprising:
an notifying unit configured to notify the data transmitting-side apparatus of the maximum number of retransmissions of the transmission data block which is associated with a transmission power ratio between the data channel and the control channel or a transmission data block size, wherein
the data transmitting-side apparatus is configured to retransmit the transmission data block, until the number of retransmissions of the transmission data block reaches the maximum number of retransmissions associated with the transmission power ratio of the transmission data block or the transmission data block size.
